# EUROPEAN PATENT SPECIFICATION

(11) **EP 0 411 898 B1**
(45) Date of publication and mention of the grant of the patent: **28.04.1993**
(21) Application number: 90308410.1
(22) Date of filing: 31.07.1990
(51) Int. Cl.: B63H 25/08, F16C 11/12

(54) **A universal joint**
Kreuzgelenk
Joint universel

(30) Priority: 01.08.1989 GB 8917553
(43) Date of publication of application: 06.02.1991
(73) Proprietor: RWO (Marine Equipment) Ltd., Benfleet Essex SS7 4QW (GB)
(72) Inventor: Owen, John Robert, Leigh-on-Sea, Essex, SS9 2NA (GB)
(74) Representative: Frankland, Nigel Howard

(56) References cited:
- AU-A- 456 207
- US-A- 3 670 358
- US-A- 3 929 086
- US-A- 4 228 756

## Description

THE PRESENT INVENTION relates to a universal joint and more particularly to a universal joint for use in connecting a tiller to a tiller extension on a yacht or dinghy.

A conventional connection between the tiller, which is connected to the rudder, and a tiller extension arm on a yacht or dinghy incorporates a universal joint in the form of an elastomeric element attached at one end to the tiller and at the other end to the tiller extension. The elastomeric element is of an elongate nature and has a neck or region of reduced thickness which enables it to flex in various directions so that the tiller may be operated, via the tiller extension, from different positions within the boat. Problems arise, however, if the tiller extension handle is twisted since this causes the end of the elastomeric element to which it is attached to rotate about the longitudinal axis of the element. Since the other end of the element is fixed relative to the tiller this results in 'wringing' or waisting of the element. Repeated twisting of the elastomeric element leads eventually to failure of the element and in any event shortens the life of the element and thus the life of the universal joint.

The present invention seeks to provide an improved universal joint for connecting a tiller to a tiller extension on a yacht or dinghy.

According to the present invention there is provided a universal joint for connecting a first member to a second member, the joint comprising a flexible element adapted to be mounted on one of the members, a casing or sleeve adapted to surround part of the flexible element, the casing or sleeve being freely rotatable around the said part of the flexible element but being fixed axially relative to the flexible element, and means for connecting the casing or sleeve to the other of the members.

Preferably the flexible element is an elongate element and the casing or sleeve is of generally cylindrical form.

Conveniently the casing or sleeve is formed in two portions.

Advantageously the two portions each constitute half of the casing or sleeve, each portion being of arcuate cross-section.

Preferably the member to which the casing or sleeve is adapted to be connected serves to retain the two portions of the casing or sleeve in position surrounding part of the flexible element.

Preferably the member to which the casing or sleeve is adapted to be connected defines a recess which snugly accommodates the casing or sleeve.

Conveniently the casing or sleeve and the flexible element are provided with cooperating projections and recesses which serve to fix the casing axially relative to the flexible element.

Advantageously the casing or sleeve defines inwardly directed annular ridges dimensioned to be received in annular grooves formed in the outer surface of the flexible element.

The casing or sleeve may be formed from a moulded, plastics material or may be in the form of a swaged tube.

This invention also provides a tiller connection for a boat, the connection comprising a universal joint as described above, the first and second members comprising a tiller and a tiller extension.

In order that the present invention may be more readily understood and so that further features thereof may be appreciated, the invention will now be described by way of example with reference to the accompanying drawings, in which:
FIGURE 1 is an exploded view of a universal joint according to the present invention;
FIGURE 2 is a partly sectioned view taken along the longitudinal axis of the universal joint of Figure 1 showing the joint in the assembled condition; and
FIGURE 3 corresponds to Figure 2 but illustrates a slightly modified embodiment of the universal joint.

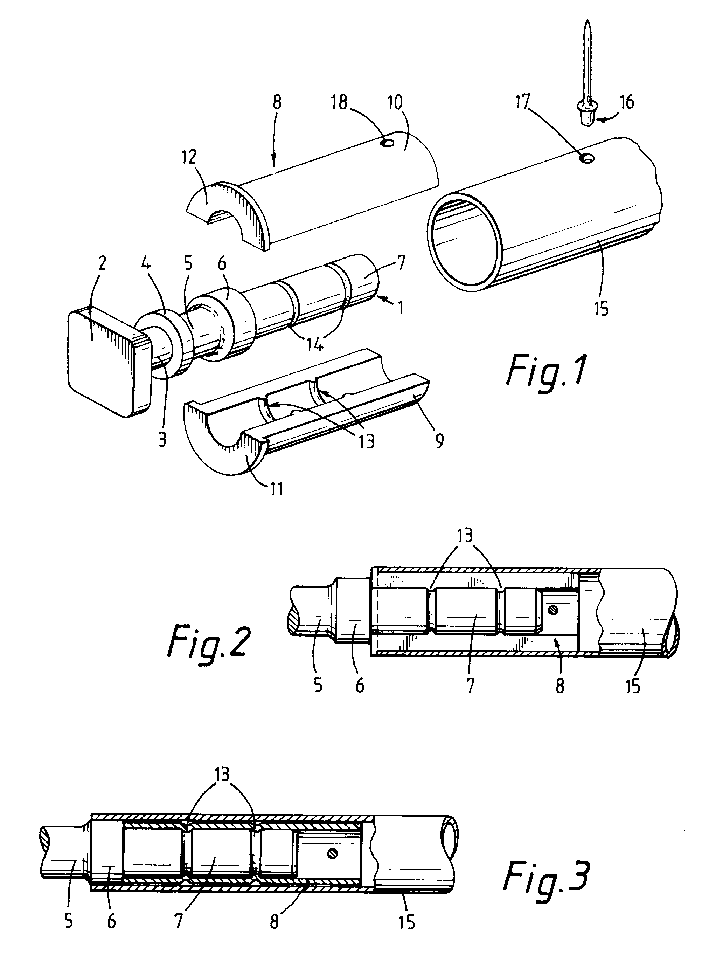

Referring to Figure 1 of the drawings a universal joint in accordance with the present invention incorporates a generally elongate flexible element 1 having a square base 2 adapted to be connected to the tiller of a boat by any appropriate means. Apart from the base 2 the remainder of the flexible element is of circular cross-section with regions of differing diameter along the length of the element. Thus, as the element extends away from the base 2 there is a first cylindrical portion 3 followed by a larger diameter ring 4, which extends into a reduced diameter neck 5 about which region the element flexes. The neck 5 leads into a second cylindrical portion 6 of the same diameter as the ring 4 which in turn extends into a reduced diameter end cylindrical portion 7. The flexible element is formed of an appropriately flexible material which may be a rubber or plastics material.

A cylindrical casing or sleeve 8, formed from two identical abutting halves 9, 10 is designed to be mounted upon the flexible element 1 so as to surround the end portion 7. Each half 9, 10 of the sleeve is of arcuate cross-section and carries, at one end, an outwardly projecting flange 11, 12 which abuts the end face of the thickened portion 6 of the flexible element when the sleeve is mounted around the end portion 7. It is envisaged that the sleeve 8 will be moulded from a plastics material.

The internal surface of the sleeve 8 and the external surface of the end portion 7 are provided with cooperating ridges and grooves which serve to fix the sleeve 8 in position axially relative to the flexible element. Thus, the internal surface of each half 9, 10 of the sleeve 8 carries half of a pair of inwardly directed annular ridges 13, whilst the outer surface of the end portion 7 defines a pair of annular grooves 14 designed to receive the ridges 13 when the sleeve surrounds the end portion.

The sleeve 8 is of greater length than the end portion 7 as can clearly be seen from Figure 2 of the drawings. Thus, the end of the sleeve 8 projects beyond the end of the flexible element 1 when the sleeve is mounted thereon. The sleeve is designed to be connected to a tiller extension 15 which is in the form of a hollow tube dimensioned to pass over the assembled sleeve with minimal clearance. Thus, the tiller extension defines a recess which snugly accommodates the sleeve. The tiller extension is connected to the sleeve 8 by means of a rivet 16 which passes through apertures 17 in the tube and apertures 18 located adjacent the end of the sleeve 8, in that part of the sleeve which projects beyond the flexible element when the sleeve is mounted thereon.

As will be apparent from the above description the assembly of the universal joint is simply effected by placing the two halves 9, 10 of the sleeve 8 around the end portion 7 of the flexible element 1 with the flange portions 11, 12 abutting the end face of the adjacent thickened portion 6 of the element, passing the tiller extension over the sleeve so that it abuts the flange portions 11, 12, aligning the apertures 17, 18 and rivetting the sleeve and tiller extension together. The base 2 of the flexible element is finally connected to the end of the tiller to which the tiller extension is to be connected. The tiller extension now serves to retain the two halves 9, 10 of the sleeve 8 in position surrounding the end port on of the flexible element. The sleeve 8 is fixed axially relative to the flexible element by ridges and grooves 13, 14 but may rotate about the flexible element. Thus, the flexible element is not fixed directly to the tiller extension and if the extension handle is twisted or rotated the flexible element will not also be twisted but the sleeve 8 will rotate around the end portion 7. This prevents 'wringing' or waisting of the element and prolongs the life of the universal joint.

It will be appreciated that alterations may be made to the above-described design of joint without departing from the scope of the present invention. Thus, for example, if the internal diameter of the tiller extension tube 15 is only slightly larger than the external diameter of the end portion 7 of the flexible element then it may be impracticable to utilise a moulded sleeve 8. In this case the sleeve 8 may comprise a thin walled tube which is passed over the end portion 7 of the flexible element and swaged to form the ridges 13 which extend into the grooves 14. The tube would be longer than the end portion 7 to enable the tube to be rivetted to the tiller extension in the same manner as described above. If desired the tube could be split longitudinally into two halves, in similar manner to the sleeve 8. Figure 3 illustrates this modified arrangement.

## Claims

1. A universal joint for connecting a first member to a second member, the joint comprising a flexible element (1) adapted to be mounted on one of the members, a casing or sleeve (8) adapted to surround part of the flexible element (1), the casing or sleeve (8) being freely rotatable around the said part of the flexible element (1) but being fixed axially relative to the flexible element (1), and means (16) for connecting the casing or sleeve (8) to the other of the members.

2. A universal joint according to Claim 1 wherein the flexible element (1) is an elongate element and the casing or sleeve (8) is of generally cylindrical form.

3. A universal joint according to Claim 2 wherein the casing or sleeve (8) is formed in two portions.

4. A universal joint according to Claim 3 wherein the two portions each constitute half of the casing or sleeve (8), each portion being of arcuate cross-section.

5. A universal joint according to Claim 3 or, Claim 4 wherein the member to which the casing or sleeve (8) is adapted to be connected serves to retain the two portions of the casing or sleeve (8) in position surrounding part of the flexible element (1).

6. A universal joint according to Claim 5 wherein the member to which the casing or sleeve (8) is adapted to be connected defines a recess which snugly accommodates the casing or sleeve (8).

7. A universal joint according to any one of the preceding claims wherein the casing or sleeve (8) and the flexible element (1) are provided with cooperating projections (13) and recesses (14) which serve to fix the casing (8) axially relative to the flexible element (1).

8. A universal joint according to Claim 7 wherein the casing or sleeve (8) defines inwardly directed annular ridges (13) dimensioned to be received in annular grooves (14) formed in the outer surface of the flexible element (1).

9. A universal joint according to any one of the preceding claims wherein the casing or sleeve (8) is formed from a moulded plastics material or is in the form of a swaged tube.

10. A tiller connection for a boat, the connection comprising a universal joint according to any one of the preceding claims, the first and second members comprising a tiller and a tiller extension.

## Patentansprüche

1. Kreuzgelenk zum Verbinden eines ersten Elements mit einem zweiten Element, wobei das Gelenk ein flexibles Element (1), das zur Befestigung auf einem der Elemente eingerichtet ist, ein Gehäuse oder eine Manschette (82), das zum Umgeben eines Teiles des flexiblen Elements (1) eingerichtet ist, wobei das Gehäuse oder die Manschette (8) sich um den Teil des flexiblen Elements (1) frei drehen kann, jedoch axial relativ zu dem flexiblen Element (1) fixiert ist, und Mittel (16) zum Verbinden des Gehäuses oder der Manschette (8) mit dem anderen der Elemente aufweist.

2. Kreuzgelenk nach Anspruch 1, wobei das flexible Element (1) ein längliches Element ist und das Gehäuse oder die Manschette (8) im wesentlichen zylindrisch geformt ist.

3. Kreuzgelenk nach Anspruch 2, wobei das Gehäuse oder die Manschette (8) zweiteilig ausgebildet ist.

4. Kreuzgelenk nach Anspruch 3, wobei die beiden Teile jeweils eine Hälfte des Gehäuses oder der Manschette (8) bilden und jeder geil im Querschnitt bogenförmig ist.

5. Kreuzgelenk nach Anspruch 3 oder Anspruch 4, wobei das Element, an das das Gehäuse oder die Manschette (8) zur Verbindung angepaßt ist, zum Rückhalten der beiden Teile des Gehäuses oder der Manschette (8) an Ort und Stelle in einer Position, in der es einen Teil des flexiblen Elements (1) umgibt, dient.

6. Kreuzgelenk nach Anspruch 5, wobei das Element, an das das Gehäuse oder die Manschette (8) zur Verbindung angepaßt ist, eine Ausnehmung definiert, die das Gehäuse oder die Manschette (8) eng passend aufnimmt.

7. Kreuzgelenk nach einem der vorangehenden Ansprüche, wobei das Gehäuse oder die Manschette (8) und das flexible Element (1) mit zusammenwirkenden Vorsprüngen (13) und Ausnehmungen (14) versehen sind, die zur Fixierung des Gehäuses (8) axial relativ zu dem flexiblen Element dienen.

8. Kreuzgelenk nach Anspruch 7, wobei das Gehäuse oder die Manschette (8) nach innen gerichtete, ringförmige Vorsprünge (13) ausbildet, die zur Aufnahme in ringförmigen Kerben (14) dimensioniert sind, die in der Außenfläche des flexiblen Elements (1) ausgebildet sind.

9. Kreuzgelenk nach einem der vorangehenden Ansprüche, wobei das Gehäuse oder die Manschette (8) aus einem gegossenen Kunststoffmaterial oder in Form eines gepreßten Rohres ausgebildet ist.

10. Ruderpinnenverbindung für ein Boot, wobei die Verbindung ein Kreuzgelenk nach einem der vorangehenden Ansprüche aufweist und das erste und das zweite Element eine Ruderpinne und eine Ruderpinnenverlängerung aufweisen.

## Revendications

1. Joint universel destiné à raccorder un premier élément à un second élément, le joint comprenant un élément souple (1) pouvant être monté sur un des éléments, une enveloppe ou manchon (8) pouvant entourer une partie de l'élément souple (1), l'enveloppe ou manchon (8) étant librement rotatif autour de la partie de l'élément souple (1) mais étant axialement fixe par rapport à l'élément souple (1) et des moyens (16) destinés à raccorder l'enveloppe ou manchon (8) à l'autre des éléments.

2. Joint universel selon la revendication 1, dans lequel l'élément souple (1) est un élément allongé et l'enveloppe ou manchon (8) est de forme généralement cylindrique.

3. Joint universel selon la revendication 2, dans lequel l'enveloppe ou manchon (8) est constitué de deux portions.

4. Joint universel selon la revendication 3, dans lequel les deux portions constituent chacune la moitié de l'enveloppe ou manchon (8), chaque portion étant de section transversale arquée.

5. Joint universel selon la revendication 3 ou la revendication 4, dans lequel l'élément sur lequel l'enveloppe ou manchon (8) peut être raccordé sert à retenir les deux portions de l'enveloppe ou manchon (8) en position entourant une partie de l'élément souple (1).

6. Joint universel selon la revendication 5, dans lequel l'élément sur lequel l'enveloppe ou manchon (8) peut être raccordé définit un évidement qui reçoit en ajustage à frottement doux l'enveloppe ou manchon (8).

7. Joint universel selon l'une quelconque des revendications précédentes, dans lequel l'enveloppe ou.le manchon (8) et l'élément souple (1) sont dotés de saillies ou crêtes coopérantes (13) et d'évidements ou gorges (14) qui servent à fixer l'enveloppe (8) axialement par rapport à l'élément souple (1).

8. Joint universel selon la revendication 7, dans lequel l'enveloppe ou manchon (8) définit des crêtes ou saillies annulaires (13) dirigées vers l'intérieur et dimensionnées de façon à se loger dans des gorges ou évidements annulaires (14) ménagés dans la surface extérieure de l'élément souple (1).

9. Joint universel selon l'une quelconque des revendications précédentes, dans lequel l'enveloppe ou manchon (8) est formé à partir d'une matière plastique moulée ou se présente sous la forme d'un tube matricé.

10. Raccord de gouvernail pour un bateau, le raccord comprenant un joint universel selon l'une quelconque des revendications précédentes, les premier et second éléments comprenant un gouvernail et une pièce de prolongement de gouvernail.
